# EUROPÄISCHE PATENTSCHRIFT

(11) **EP 2 659 789 B1**
(45) Veröffentlichungstag und Bekanntmachung des Hinweises auf die Patenterteilung: **01.05.2019**
(21) Anmeldenummer: 12166745.5
(22) Anmeldetag: 04.05.2012
(51) Int. Cl.: A23L 27/00, A23L 2/56, A23L 27/20, A23G 4/06, A23L 27/29, A23L 27/30, A23L 33/105

(54) **Stoffgemische**
Compound mixtures
Compositions de matière

(43) Veröffentlichungstag der Anmeldung: 06.11.2013
(73) Patentinhaber: Symrise AG, 37603 Holzminden (DE)
(72) Erfinder: Krammer, Gerhard, 37603 Holzminden (DE); Siegel, Sven, 37671 Höxter (DE); Kindel, Günter, 37671 Höxter (DE)
(74) Vertreter: Eisenführ Speiser

(56) Entgegenhaltungen:
- EP-A1- 1 210 880
- EP-A1- 2 186 506
- EP-A1- 2 298 084
- WO-A1-2005/048743
- US-A1- 2007 116 819
- US-A1- 2010 196 554
- KEITH KLESK ET AL: "Aroma Extract Dilution Analysis of Cv. Marion ( Rubus spp. hyb ) and Cv. Evergreen ( R. laciniatus L.) Blackberries", JOURNAL OF AGRICULTURAL AND FOOD CHEMISTRY, Bd. 51, Nr. 11, 1. Mai 2003 (2003-05-01), Seiten 3436-3441, XP55040245, ISSN: 0021-8561, DOI: 10.1021/jf0262209

## Beschreibung

### Gebiet der Erfindung

Die Erfindung befindet sich auf dem Gebiet der Aromastoffe und betrifft neue Stoffgemische enthaltend monocyclische Terpene und spezielle Wirkstoffe, Nahrungsmittel, die diese enthalten, ein Verfahren zur Geschmacksverbesserung sowie die Verwendung der Wirkstoffe als Geschmacksverbesserer.

### Stand der Technik

Botanisch betrachtet stellen Zitruspflanzen eine Pflanzengattung aus der Familie der Rautengewächse *(Rutaceae)* dar, die ihre Heimat in den tropischen und subtropischen Gebieten Südostasiens haben. Aus der Sicht des Chemikers, zumal des Lebensmittelchemikers, stellen Zitrusfrüchte einzigartige Quellen zahlreicher monocyclischer Terpene dar, denen gemeinsam ist, dass sie über den einzigartigen Zitrusgeruch und -geschmack verfügen, der allgemein als Synonym für Frische und Reinheit gilt. Dass Zitrusaromen auch für den Feinschmecker ihre Bedeutung haben, zeigt, dass rund 20 % aller Interneteinträge zu diesem Thema einen Bezug zum Kochen aufweisen.

Insgesamt sind Zitrusaromen im Allgemeinen und monocyclische Terpene im Besonderen für die Aromastoffindustrie wichtige Verkaufsprodukte. Von erheblichem Nachteil ist dabei, dass die Stoffe allgemein sehr oxidationsanfällig sind. Von d-Limonen ist beispielsweise bekannt, dass es an der Luft zu Carvon, Carveol und Terpineol abgebaut wird. Dabei werden die fruchtigen, zitrischen und oranginen Noten durch die intensiv würzigen und krautigen Geschmacksnoten der Abbauprodukte überdeckt. Insbesondere tritt die kümmelartige Note des d-Carvons sehr schnell in den Vordergrund, was aus Sicht des Lebensmitteltechnikers, der ein Produkt mit Zitrusgeschmack komponieren möchte, außerordentlich unerwünscht ist.

Das Problem der mangelhaften Oxidationsstabilität von Terpenen ist literaturbekannt und somit hat es nicht an Versuchen gemangelt, den oxidativen Abbau der Stoffe zu verhindern oder wenigstens zu verlangsamen. Ansätze, bei denen man bekannte Antioxidatien, wie beispielsweise BHT, BHA oder Tocopherol zugegeben hat, haben sich als unbefriedigend erwiesen, zumal die Anwesenheit dieser Zusätze in Lebensmittel auch nicht erwünscht ist [vgl. Kimura et al., J. Agricult. Food Chem. 31, S.800-804 (1983**), *ibid.*** 47, 1661-1663 (1983**)**.]. Die internationale Patentanmeldung WO 1998 058656 A1 (Hauser) schlägt vor, die Zitruskomponenten durch Zugabe von Rosmarinsäure zu stabilisieren; doch auch diese Alternative erweist sich in der Praxis als nicht ausreichend.

Statt die Zitruskomponenten durch Zusätze zu stabilisieren, findet sich in der Literatur die Alternative, den Sauerstoff auszuschließen, indem man die Terpene verkapselt. So wird beispielsweise in der US 5,603,952 (Soper) vorgeschlagen, Terpene in Kapseln aus Fischgelatine einzuschließen. Allerdings wird damit das Einsatzgebiet der Produkte stark eingeschränkt, denn nicht in jeder Anwendung sind Kapseln gewünscht.

Die US 2007 0116819 A1 beschreibt Süßstoffzubereitungen, die natürliche und/oder synthetische "High Potential Sweeteners" zusammen mit Fettsäuren und Zusammensetzungen, die süßen Geschmack verstärken, enthalten.

Die WO 2005 048743 A1 beschreibt Nahrungsmittel mit einer Fruchtkomponente, die verschiedene Frischekomponenten (z.B. Menthol) mit Kühlstoffen kombinieren. Es können auch Süßstoffe zugegen sein, wie beispielsweise Stevia.

In der EP 2298084 A1 sind Aromamischungen, enthaltend natürlich vorkommende, süß schmeckende Stoffe sowie Phyllodulcin, beschrieben.

Die Veröffentlichung KEITH KLESK ET AL: "Aroma Extract Dilution Analysis of Cv. Marion (Rubus spp. hyb) and Cv. Evergreen (R. laciniatus L.) Blackberries", JOURNAL OF AGRICULTURAL AND FOOD CHEMISTRY, Bd. 51, Nr. 11, 1. Mai 2003 (2003-05-01), Seiten 3436-3441 beschreibt eine Aromaextraktverdünnungsanalyse von Blaubeeren. Die so gewonnenen Extrakte enthalten Limonen, Terpinolen und Carvon.

Die Aufgabe der vorliegenden Erfindung hat somit darin bestanden, einen alternativen und effizienteren Weg aufzuzeigen, auf dem man der Geschmacksbeeinträchtigung von Zitrusaromen durch oxidativen Abbau begegnen kann.

### Beschreibung der Erfindung

Gegenstand der Erfindung sind Stoffgemische, enthaltend
(a) 20 bis 80 Gew.-% monocyclische Terpene und
(b) 80 bis 20 Gew.-% Wirkstoffe, ausgewählt aus der Gruppe, die gebildet wird von Rebaudiosiden oder diese enthaltende Pflanzenextrakten, Steviosiden oder diese enthaltende Pflanzenextrakten, Naringindihydrochalkon, Mogrosiden oder diese enthaltende Pflanzenextrakten, Rubusosiden oder diese enthaltende Pflanzenextrakten
Überraschenderweise wurde gefunden, dass durch den Zusatz der Wirkstoffe, insbesondere von Rebaudiosiden oder Stevia-Extrakten mit hohem Rebaudiosidgehalt zwar der oxidative Abbau der monocyclischen Terpene nicht verhindert werden kann, so dass diese in gewissen Mengen nach wie vor in den Zubereitungen enthalten sein können, es kommt jedoch zu einer Maskierung der unerwünschten krautartigen Geschmacksnoten. Der Zusatz von Rebaudiosid, insbesondere zu d-Limonen, führt indes sogar dazu, dass der Zitrusgeschmack verstärkt wird. Durch den Zusatz von weiteren Süßstoffen, insbesondere Glycyrrhizinsäurederivaten, lässt sich dieser Effekt noch weiter steigern. Die Lösung der Aufgabe unterscheidet sich demnach schon grundsätzlich vom genannten Stand der Technik, weil der oxidative Abbau der Terpene hingenommen und stattdessen der unangenehme Geschmack maskiert wird.

### Monocyclische Terpene

Die meisten monocyclischen Monoterpene (Komponente a) leiten sich vom p-Menthan ab und weisen ein Cyclohexangerüst auf. Zu den wichtigsten Vertretern gehören neben dem Menthan, Phellandren, Terpinolen, Terpinen, Cymol und Limonen.

Im Sinne der Erfindung stellt Limonen das bevorzugte monozyklische Terpen dar, da es anwendungstechnisch von hoher Wichtigkeit ist und besonders leicht oxidativ abgebaut wird. Der Stoff kommt in zwei Enantiomeren vor, nämlich als (R)-(+)-Limonen (auch als D-(+) oder kurz (+)-Limonen bezeichnet) sowie als (S)-(-)-Limonen (auch als L-(-)-Limonen oder (-)-Limonen bezeichnet). Das Racemat der beiden Enantiomere wird auch Dipenten genannt.

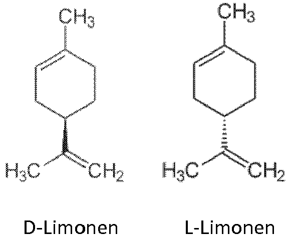

Im Sinne der vorliegenden Erfindung ist D-Limonen das bevorzugte monozyklische Terpen.

### Rebaudioside

Die technische Lehre der Erfindung besteht wie gesagt in ihrer hauptsächlichen Ausgestaltung darin, den monocyclischen Terpenen im Allgemeinen und dem D-Limonen im Besonderen Rebaudioside (Komponente b) zuzugeben, wodurch nicht nur der krautige Geschmack der Abbauprodukte überdeckt, sondern die Zitrusnote sogar verstärkt wird.

Rebaudioside gehören zu den Steviosiden, den Hauptbestandteilen der Pflanze *Stevia rebaudiana*, die auch als Süßkraut oder Honigkraut bezeichnet wird.

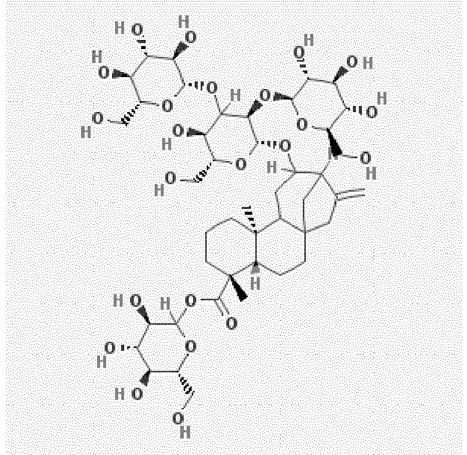

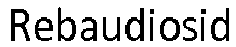

10 % der Trockenmasse der Blätter macht das Diterpenglykoid Steviosid aus, gefolgt von Rebaudiosid A (2 bis 4 Gew.-%) sowie zehn weiteren Steviolglycosiden, wie etwa dem Dulcosid. Rebaudioside und Stevia-Extrakt sind als Süßungsmitteln inzwischen in den meisten Staaten zugelassen; eine tägliche Aufnahmemenge von bis zu 4 mg Steviosid pro Kilogramm Körpergewicht wird als unbedenklich angesehen. Im Sinne der Erfindung können einzelne Rebaudioside oder die Extrakte der Stevia-Pflanze eingesetzt werden. Besonders bevorzugt ist jedoch die Verwendung von Rebaudiosid A, da dieser Stoff eine geringere Bitterkeit und die höchste Süßkraft aufweist. Die erfindungsgemäßen Stoffgemische können die Komponenten (a) und (b) im Gewichtsverhältnis von vorzugsweise etwa 25:75 bis etwa 75:25 und insbesondere etwa 40:60 bis etwa 60:40 enthalten.

### Wirkstoffe

Alternativ oder ergänzend zu den Rebaudiosiden bzw. Stevia Extrakten können als Komponente (b) auch verschiedene andere Wirkstoffe eingesetzt werden, die ebenfalls die Zitrusnote verstärken, selbst aber kein Fruchtaroma aufweisen. Es sind dies:
- Naringin,
- Dihydrochalcone,
- Mogroside sowie
- Extrakten der Pflanzen der Gattung *Rubus.*

**Naringin** ist ein polyphenolisches Glykosid, das in der Grapefruit und dem Pomelo enthalten ist und diesen einen bitteren Geschmack verleiht.

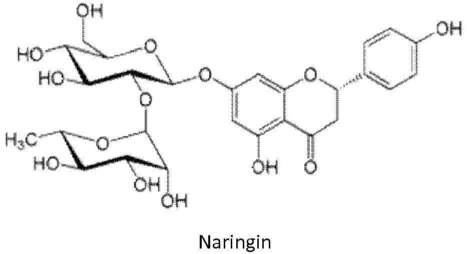

Der Stoff ist insbesondere wegen seiner lipidsenkenden Wirkung bekannt.

Auch die **Dihydrochalcone** stellen Polyphenole dar, wobei insbesondere die beiden Vertreter Naringin Dihydrochalcon und Neohesperidin Dihydrochalcon hervorzuheben sind, die als künstliche Süßungsmittel bekannt sind:

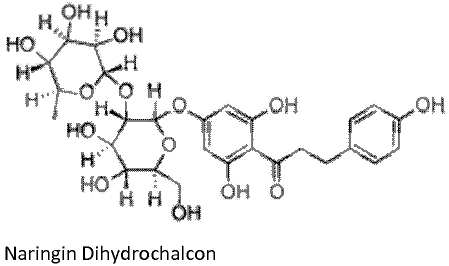

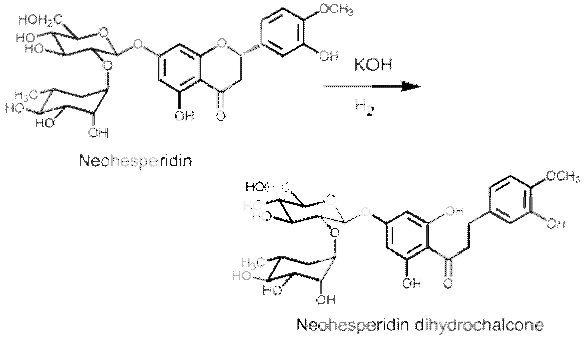

Unter der Bezeichnung **Mogroside** wird eine Gruppe von Glykosiden des Cucurbitans verstanden, die als Bestandteil des natürlichen Süßungsmittels Luo Han Guo bekannt sind. Hervorzuheben ist hier das Mogrosid-5, das 400mal süßer als Zucker ist.

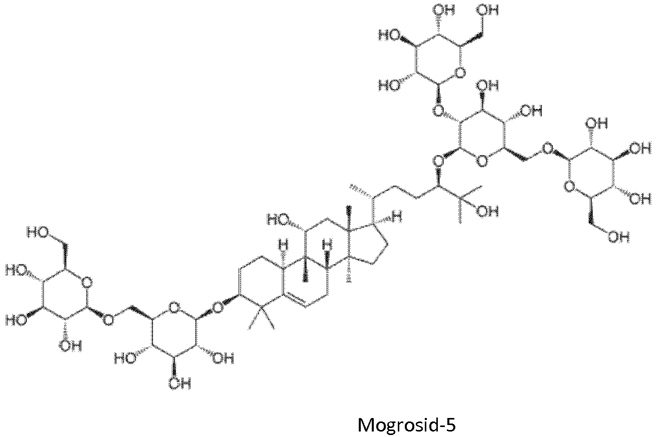

Schließlich kommen als Komponente (b) Extrakte der Pflanzen in Betracht, die ausgewählt sind aus der Gruppe, die gebildet wird von *Rubus allegheniensis, Rubus arcticu, Rubus strigosus, Rubus armeniacus, Rubus caesius, Rubus chamaemorus, Rubus corylifolius agg., Rubus fruticosus agg., Rubus geoides, Rubus glaucus, Rubus gunnianus, Rubus idaeus, Rubus illecebrosus, Rubus laciniatus, Rubus leucodermis, Rubus loganobaccus, Rubus loxensis, Rubus nepalensis, Rubus nessensis, Rubus nivalis, Rubus odoratus, Rubus pentalobus, Rubus phoenicolasius, Rubus saxatilis, Rubus setchuenensis, Rubus spectabilis* und *Rubus ulmifolius* sowie deren Gemischen. Hierbei handelt es sich im Wesentlichen um Extrakte von unterschiedlichen Brombeer- und Himbeerarten, die einen Gehalt an Rubosiden aufweisen. Bevorzugt sind Extrakte von *Rubus Suavissimus.*

### Glycyrrhizinsäure und Derivate

In überraschender Weise wurde gefunden, dass der Zusatz der genannten Wirkstoffe nicht nur den unerwünschten Geschmack der Terpenabbauprodukte überdeckt, sondern auch im Gegenteil die Zitrusnote noch verstärkt. Letzterer Effekt kann im Sinne der Erfindung noch gesteigert werden, wenn man als zusätzlichen Geschmacksverstärker Glycyrrhizinsäure oder ein entsprechendes Salz (optionale Komponente c) zusetzt.

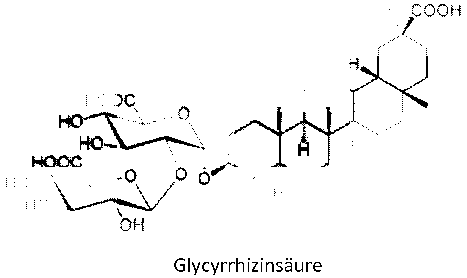

Auch dieser Befund ist für sich gesehen nicht vorhersehbar gewesen, denn die Glycyrrhizinsäure und die Glycyrrhinate weisen einen intensiven Lakritzgeschmack auf. Im Sinne der Erfindung ist es möglich, die Säure selbst, ihre Salze - beispielsweise Natrium-, Kalium- oder Ammoniumsalz - oder die Extrakte der Pflanze *Glycyrrhiza glabra* einzusetzen. Besonders bevorzugt ist das Monoammoniumglycyrrhizat.

### Extraktionsverfahren

Sofern vorstehend_auf Extrakte Bezug genommen worden ist, kann deren Herstellung in an sich bekannter Weise erfolgen, d.h. beispielsweise durch wässrigen, alkoholischen oder wässrig-alkoholischen Auszug der Pflanzen bzw. Pflanzenteile bzw. der Blätter oder Früchte. Geeignet sind alle herkömmlichen Extraktionsverfahren wie z.B. Mazeration, Remazeration, Digestion, Bewegungsmazeration, Wirbelextraktion, Ultraschallextraktion, Gegenstromextraktion, Perkolation, Reperkolation, Evakolation (Extraktion unter vermindertem Druck), Diakolation oder Festflüssig-Extraktion unter kontinuierlichem Rückfluss. Für den großtechnischen Einsatz vorteilhaft ist die Perkolationsmethode. Als Ausgangsmaterial können frische Pflanzen oder Pflanzenteile eingesetzt werden, üblicherweise wird jedoch von getrockneten Pflanzen und/oder Pflanzenteilen ausgegangen, die vor der Extraktion mechanisch zerkleinert werden können. Hierbei eignen sich alle dem Fachmann bekannten Zerkleinerungsmethoden, als Beispiel sei die Gefriermahlung genannt. Als Lösungsmittel für die Durchführung der Extraktionen können organische Lösungsmittel, Wasser (vorzugsweise heißes Wasser einer Temperatur von über 80 °C und insbesondere von über 95 °C) oder Gemische aus organischen Lösungsmitteln und Wasser, insbesondere niedermolekulare Alkohole mit mehr oder weniger hohen Wassergehalten, verwendet werden. Besonders bevorzugt ist die Extraktion mit Methanol, Ethanol, Pentan, Hexan, Heptan, Aceton, Propylenglykolen, Polyethylenglykolen sowie Ethylacetat sowie Mischungen hieraus sowie deren wässrige Gemische. Die Extraktion erfolgt in der Regel bei 20 bis 100 °C, bevorzugt bei 30 bis 90 °C, insbesondere bei 60 bis 80 °C. In einer bevorzugten Ausführungsform erfolgt die Extraktion unter Inertgasatmosphäre zur Vermeidung der Oxidation der Wirkstoffe des Extraktes. Dies ist insbesondere bei Extraktionen bei Temperaturen über 40 °C von Bedeutung. Die Extraktionszeiten werden vom Fachmann in Abhängigkeit vom Ausgangsmaterial, dem Extraktionsverfahren, der Extraktionstemperatur, vom Verhältnis Lösungsmittel zu Rohstoff u.a. eingestellt. Nach der Extraktion können die erhaltenen Rohextrakte gegebenenfalls weiteren üblichen Schritten, wie beispielsweise Aufreinigung, Konzentration und/oder Entfärbung unterzogen werden. Falls wünschenswert, können die so hergestellten Extrakte beispielsweise einer selektiven Abtrennung einzelner unerwünschter Inhaltsstoffe, unterzogen werden. Die Extraktion kann bis zu jedem beliebigen Extraktionsgrad erfolgen, wird aber gewöhnlich bis zur Erschöpfung durchgeführt. Typische Ausbeuten (= Trockensubstanzmenge des Extraktes bezogen auf eingesetzte Rohstoffmenge) bei der Extraktion getrockneter Blätter liegen im Bereich von 3 bis 15, insbesondere 6 bis 10 Gew.-%. Die vorliegende Erfindung umfasst die Erkenntnis, dass die Extraktionsbedingungen sowie die Ausbeuten der Endextrakte vom Fachmann ja nach gewünschtem Einsatzgebiet gewählt werden können. Diese Extrakte, die in der Regel Aktivsubstanzgehalte (= Feststoffgehalte) im Bereich von 0,5 bis 10 Gew.-% aufweisen, können als solche eingesetzt werden, es ist jedoch ebenfalls möglich, das Lösungsmittel durch Trocknung, insbesondere durch Sprüh- oder Gefriertrocknung vollständig zu entfernen, wobei ein intensiv rot gefärbter Feststoff zurückbleibt. Die Extrakte können auch als Ausgangsstoffe für die Gewinnung der oben genannten reinen Wirkstoffe dienen, sofern diese nicht auf synthetischem Wege einfacher und kostengünstiger hergestellt werden können. Demzufolge kann der Wirkstoffgehalt in den Extrakten 5 bis 100, vorzugsweise 50 bis 95 Gew.-% betragen. Die Extrakte selbst können als wässrige und/oder in organischen Solventien gelöste Zubereitungen sowie als sprüh- bzw. gefriergetrocknete, wasserfreie Feststoffe vorliegen. Als organische Lösungsmittel kommen in diesem Zusammenhang beispielsweise die aliphatischen Alkohole mit 1 bis 6 Kohlenstoffatomen (z.B. Ethanol), Ketone (z.B. Aceton), Halogenkohlenwasserstoffe (z.B. Chloroform oder Methylenchlorid), niedere Ester oder Polyole (z.B. Glycerin oder Glycole) in Frage.

### Stoffgemische

In einer weiteren bevorzugten Ausführungsform können die Stoffgemische folgende Zusammensetzungen aufweisen, nämlich
(a) etwa 20 bis etwa 80, vorzugsweise etwa 40 bis etwa 60 Gew.-% monocyclische Terpene, speziell D-Limonen und
(b) etwa 80 bis etwa 20, vorzugsweise etwa 40 bis etwa 60 Gew.-% Rebaudioside oder diese enthaltende Pflanzenextrakte, insbesondere Rebaudiosid A,
(c) 0,5 bis 10, vorzugsweise etwa 0,5 bis etwa 8 und insbesondere etwa 1 bis etwa 5 Gew.-% Wirkstoffe, ausgewählt aus der Gruppe, die gebildet wird von Naringin, Dihydrochalconen, Mogrosiden, Rubosiden sowie Extrakten der Pflanzen der Gattung *Rubus,* und/oder
(d) 0,5 bis 10, vorzugsweise etwa 0,5 bis etwa 8 und insbesondere etwa 1 bis etwa 5 Gew.-% Glycyrrhizinsäure, deren Salze oder diese enthaltende Pflanzenextrakte,
mit der Maßgabe enthalten, dass sich die Mengenangaben gegebenenfalls mit Wasser zu 100 Gew.-% ergänzen.

Die Stoffgemische können sich des Weiteren dadurch auszeichnen, dass sie einen Wassergehalt von weniger als etwa 2 und insbesondere von weniger als etwa 1 Gew.-% aufweisen. Vorzugsweise sind die Gemische völlig wasserfrei. Zu diesem Zweck können wässrige und/oder alkoholische Lösungen oder Dispersionen der Stoffgemische getrocknet werden, beispielsweise durch Sprühtrocknung, Wirbelschichttrocknung oder Lyophilisierung (Gefriertrocknung). Die trockenen Zubereitungen können anschließend entweder vermahlen oder granuliert werden.

### Kapseln

In einer weiteren Ausgestaltung der Erfindung können die Stoffgemische als Kapseln vorliegen. Neben üblichen Makrokapseln auf Basis von Gelatine kommen dabei vor allem auch so genannte Mikro- oder Nanokapseln in Betracht. Darunter werden vom Fachmann sphärische Aggregate mit einem Durchmesser im Bereich von etwa 0,0001 bis etwa 5 und vorzugsweise 0,005 bis 0,5 mm verstanden, die mindestens einen festen oder flüssigen Kern enthalten, der von mindestens einer kontinuierlichen Hülle umschlossen ist. Genauer gesagt handelt es sich um mit filmbildenden Polymeren umhüllte feindisperse flüssige oder feste Phasen, bei deren Herstellung sich die Polymere nach Emulgierung und Koazervation oder Grenzflächenpolymerisation auf dem einzuhüllenden Material niederschlagen. Nach einem anderen Verfahren werden geschmolzene Wachse in einer Matrix aufgenommen ("microsponge"), die als Mikropartikel zusätzlich mit filmbildenden Polymeren umhüllt sein können. Nach einem dritten Verfahren werden Partikel abwechselnd mit Polyelektrolyten unterschiedlicher Ladung beschichtet ("layer-by-layer"-Verfahren). Die mikroskopisch kleinen Kapseln lassen sich wie Pulver trocknen. Neben einkernigen Mikrokapseln sind auch mehrkernige Aggregate, auch Mikrosphären genannt, bekannt, die zwei oder mehr Kerne im kontinuierlichen Hüllmaterial verteilt enthalten. Ein- oder mehrkernige Mikrokapseln können zudem von einer zusätzlichen zweiten, dritten etc. Hülle umschlossen sein. Die Hülle kann aus natürlichen, halbsynthetischen oder synthetischen Materialien bestehen. Natürlich Hüllmaterialien sind beispielsweise Gummi Arabicum, Agar-Agar, Agarose, abermals Maltodextrine, Alginsäure bzw. ihre Salze, z.B. Natrium- oder Calciumalginat, Fette und Fettsäuren, Cetylalkohol, Collagen, Chitosan, Lecithine, Gelatine, Albumin, Schellack, Polysaccharide, wie Stärke oder Dextran, Polypeptide, Proteinhydrolysate, Sucrose und Wachse. Halbsynthetische Hüllmaterialien sind unter anderem chemisch modifizierte Cellulosen, insbesondere Celluloseester und -ether, z.B. Celluloseacetat, Ethylcellulose, Hydroxypropylcellulose, Hydroxypropylmethylcellulose und Carboxymethylcellulose, sowie Stärkederivate, insbesondere Stärkeether und -ester. Synthetische Hüllmaterialien sind beispielsweise Polymere wie Polyacrylate, Polyamide, Polyvinylalkohol oder Polyvinylpyrrolidon. Beispiele für Mikrokapseln des Stands der Technik sind folgende Handelsprodukte (in Klammern angegeben ist jeweils das Hüllmaterial) : *Hallcrest Microcapsules* (Gelatine, Gummi Arabicum), *Coletica Thalaspheres* (maritimes Collagen), *Lipotec Millicapseln* (Alginsäure, Agar-Agar), *Induchem Unispheres* (Lactose, mikrokristalline Cellulose, Hydroxypropylmethylcellulose); *Unicerin C30* (Lactose, mikrokristalline Cellulose, Hydroxypropylmethylcellulose), *Kobo Glycospheres* (modifizierte Stärke, Fettsäureester, Phospholipide), *Softspheres* (modifiziertes Agar-Agar) und *Kuhs Probiol Nanospheres* (Phospholipide) sowie *Primaspheres* und *Primasponges* (Chitosan, Alginate) und *Primasys* (Phospholipide). Besonders interessant für die Verkapselung von Zubereitungen für kosmetische Anwendungen sind Koazervate von kationischen Polymeren, insbesondere von Chitosan, mit anioniscchen polymeren, speziell Alginaten. Entsprechende Verfahren sind beispielsweise in den Druckschriften WO 2001 001926 A1**,** WO 2001 001927 A1**,** WO 2001 001928 A1 **und** WO 2001 001929 A1 (Cognis) beschrieben.

### Gelbildner

Mikrokapseln enthalten die Wirkstoffe häufig in einer Gelphase gelöst oder dispergiert. Als Gelbildner werden vorzugsweise solche Stoffe in Betracht gezogen, welche die Eigenschaft zeigen in wässriger Lösung bei Temperaturen oberhalb von 40 °C Gele zu bilden. Typische Beispiele hierfür sind Heteropolysaccharide und Proteine. Als thermogelierende Heteropolysaccharide kommen vorzugsweise Agarosen in Frage, welche in Form des aus Rotalgen zu gewinnenden Agar-Agar auch zusammen mit bis zu 30 Gew.-% nicht-gelbildenden Agaropektinen vorliegen können. Hauptbestandteil der Agarosen sind lineare Polysaccharide aus D-Galaktose und 3,6-Anhydro-L-galaktose, die alternierend β-1,3- und β-1,4-glykosidisch verknüpft sind. Die Heteropolysaccharide besitzen vorzugsweise ein Molekulargewicht im Bereich von 110.000 bis 160.000 und sind sowohl farb- als auch geschmacklos. Als Alternativen kommen Pektine, Xanthane (auch Xanthan Gum) sowie deren Mischungen in Frage. Es sind weiterhin solche Typen bevorzugt, die noch in 1-Gew.-%iger wässriger Lösung Gele bilden, die nicht unterhalb von 80 °C schmelzen und sich bereits oberhalb von 40 °C wieder verfestigen. Aus der Gruppe der thermogelierenden Proteine seien exemplarisch die verschiedenen Gelatine-Typen genannt.

### Kationpolymere

Geeignete kationische Polymere sind beispielsweise kationische Cellulosederivate, wie z.B. eine quaternierte Hydroxyethylcellulose, die unter der Bezeichnung Polymer JR 400® von Amerchol erhältlich ist, kationische Stärke, Copolymere von Diallylammoniumsalzen und Acrylamiden, quaternierte Vinylpyrrolidon/Vinylimidazol-Polymere, wie z.B. Luviquat® (BASF), Kondensationsprodukte von Polyglycolen und Aminen, quaternierte Kollagenpolypeptide, wie beispielsweise Lauryldimonium Hydroxypropyl Hydrolyzed Collagen (Lamequat®L/Grünau), quaternierte Weizenpolypeptide, Polyethylenimin, kationische Siliconpolymere, wie z.B. Amodimethicone, Copolymere der Adipinsäure und Dimethylaminohydroxypropyldiethylentriamin (Cartaretine®/Sandoz), Copolymere der Acrylsäure mit Dimethyldiallylammoniumchlorid (Merquat® 550/Chemviron), Polyaminopolyamide sowie deren vernetzte wasserlöslichen Polymere, kationische Chitinderivate wie beispielsweise quaterniertes Chitosan, gegebenenfalls mikrokristallin verteilt, Kondensationsprodukte aus Dihalogenalkylen, wie z.B. Dibrombutan mit Bisdialkylaminen, wie z.B. Bis-Dimethylamino-1,3-propan, kationischer Guar-Gum, wie z.B. Jaguar® CBS, Jaguar® C-17, Jaguar® C-16 der Firma Celanese, quaternierte Ammoniumsalz-Polymere, wie z.B. Mirapol® A-15, Mirapol® AD-1, Mirapol® AZ-1 der Firma Miranol. Vorzugsweise wird als Verkapselungsmaterial Chitosan eingesetzt. Chitosane stellen Biopolymere dar und werden zur Gruppe der Hydrokolloide gezählt. Chemisch betrachtet handelt es sich um partiell deacetylierte Chitine unterschiedlichen Molekulargewichtes, die den folgenden - idealisierten - Monomerbaustein enthalten:

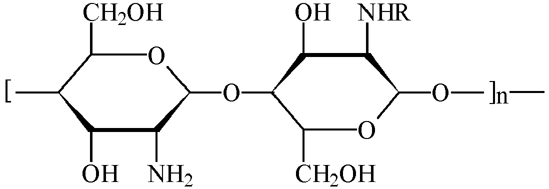

Im Gegensatz zu den meisten Hydrokolloiden, die im Bereich biologischer pH-Werte negativ geladen sind, stellen Chitosane unter diesen Bedingungen kationische Biopolymere dar. Die positiv geladenen Chitosane können mit entgegengesetzt geladenen Oberflächen in Wechselwirkung treten und werden daher in kosmetischen Haar- und Körperpflegemitteln sowie pharmazeutischen Zubereitungen eingesetzt. Zur Herstellung der Chitosane geht man von Chitin, vorzugsweise den Schalenresten von Krustentieren aus, die als billige Rohstoffe in großen Mengen zur Verfügung stehen. Das Chitin wird dabei in einem Verfahren, das erstmals von Hackmann et al. beschrieben worden ist, üblicherweise zunächst durch Zusatz von Basen deproteiniert, durch Zugabe von Mineralsäuren demineralisiert und schließlich durch Zugabe von starken Basen deacetyliert, wobei die Molekulargewichte über ein breites Spektrum verteilt sein können. Vorzugsweise werden solche Typen eingesetzt, wie die ein durchschnittliches Molekulargewicht von 10.000 bis 500.000 bzw. 800.000 bis 1.200.000 Dalton aufweisen und/oder eine Viskosität nach Brookfield (1 Gew.-%ig in Glycolsäure) unterhalb von 5000 mPas, einen Deacetylierungsgrad im Bereich von 80 bis 88 % und einem Aschegehalt von weniger als 0,3 Gew.-% besitzen. Aus Gründen der besseren Wasserlöslichkeit werden die Chitosane in der Regel in Form ihrer Salze, vorzugsweise als Glycolate eingesetzt.

### Anionpolymere

Die anionischen Polymere haben die Aufgabe, mit den kationischen Membranen zu bilden. Für diesen Zweck eignen sich vorzugsweise Salze der Alginsäure. Bei der Alginsäure handelt es sich um ein Gemisch carboxylgruppenhaltiger Polysaccharide mit folgendem idealisierten Monomerbaustein:

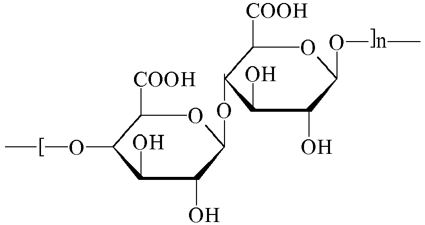

Das durchschnittliche Molekulargewicht der Alginsäuren bzw. der Alginate liegt im Bereich von 150.000 bis 250.000. Dabei sind als Salze der Alginsäure sowohl deren vollständige als auch deren partiellen Neutralisationsprodukte zu verstehen, insbesondere die Alkalisalze und hierunter vorzugsweise das Natriumalginat ("Algin") sowie die Ammonium- und Erdalkalisalze. besonders bevorzugt sind Mischalginate, wie z.B. Natrium/Magnesium- oder Natrium/Calciumalginate. In einer alternativen Ausführungsform der Erfindung kommen für diesen Zweck jedoch auch anionische Chitosanderivate, wie z.B. Carboxylierungs- und vor allem Succinylierungsprodukte in Frage. Alternativ kommen auch Poly(meth)acrylate mit durchschnittlichen Molekulargewichten im Bereich von 5.000 bis 50.000 Dalton sowie die verschiedenen Carboxymethylcellulosen in Frage. Anstelle der anionischen Polymeren können für die Ausbildung der Hüllmembran auch anionische Tenside oder niedermolekulare anorganische Salze, wie beispielsweise Pyrophosphate eingesetzt werden.

### Verkapselung

Zur Herstellung der Mikrokapseln stellt man üblicherweise eine 1 bis 10, vorzugsweise 2 bis 5 Gew.-%ige wässrige Lösung des Gelbildners, vorzugsweise des Agar-Agars her und erhitzt diese unter Rückfluss. In der Siedehitze, vorzugsweise bei 80 bis 100 °C, wird eine zweite wässrige Lösung zugegeben, welche das Kationpolymer, vorzugsweise das Chitosan in Mengen von 0,1 bis 2, vorzugsweise 0,25 bis 0,5 Gew.-% und den Wirkstoffen in Mengen von 0,1 bis 25 und insbesondere 0,25 bis 10 Gew.-% enthält; diese Mischung wird als Matrix bezeichnet. Die Beladung der Mikrokapseln mit Wirkstoffen kann daher ebenfalls 0,1 bis 25 Gew.-% bezogen auf das Kapselgewicht betragen. Falls gewünscht, können zu diesem Zeitpunkt zur Viskositätseinstellung auch wasserunlösliche Bestandteile, beispielsweise anorganische Pigmente zugegeben werden, wobei man diese in der Regel in Form von wässrigen oder wässrig/alkoholischen Dispersionen zusetzt. Zur Emulgierung bzw. Dispergierung der Wirkstoffe kann es ferner von Nutzen sein, der Matrix Emulgatoren und/oder Lösungsvermittler hinzuzugeben. Nach der Herstellung der Matrix aus Gelbildner, Kationpolymer und Wirkstoffen kann die Matrix optional in einer Ölphase unter starker Scherung sehr fein dispergiert werden, um bei der nachfolgenden Verkapselung möglichst kleine Teilchen herzustellen. Dabei hat es sich als besonders vorteilhaft erwiesen, die Matrix auf Temperaturen im Bereich von 40 bis 60 °C zu erwärmen, während man die Ölphase auf 10 bis 20 °C kühlt. Im letzten, nun wieder obligatorischen Schritt erfolgt dann die eigentliche Verkapselung, d.h. die Ausbildung der Hüllmembran durch Inkontaktbringen des Kationpolymers in der Matrix mit den anionischen Polymeren. Hierzu empfiehlt es sich, die gegebenenfalls in der Ölphase dispergierte Matrix bei einer Temperatur im Bereich von 40 bis 100, vorzugsweise 50 bis 60 °C mit einer wässrigen, etwa 1 bis 50 und vorzugsweise 10 bis 15 Gew.-%ige wässrigen Lösung des Anionpolymers zu behandeln und dabei - falls erforderlich - gleichzeitig oder nachträglich die Ölphase zu entfernen. Die dabei resultierenden wässrigen Zubereitungen weisen in der Regel einen Mikrokapselgehalt im Bereich von 1 bis 10 Gew.-% auf. In manchen Fällen kann es dabei von Vorteil sein, wenn die Lösung der Polymeren weitere Inhaltsstoffe, beispielsweise Emulgatoren oder Konservierungsmittel enthält. Nach Filtration werden Mikrokapseln erhalten, welche im Mittel einen Durchmesser im Bereich von vorzugsweise etwa 0,01 bis 1 mm aufweisen. Es empfiehlt sich, die Kapseln zu sieben, um eine möglichst gleichmäßige Größenverteilung sicherzustellen. Die so erhaltenen Mikrokapseln können im herstellungsbedingten Rahmen eine beliebige Form aufweisen, sie sind jedoch bevorzugt näherungsweise kugelförmig. Alternativ kann man die Anionpolymere auch zur Herstellung der Matrix einsetzen und die Verkapselung mit den Kationpolymeren, speziell den Chitosanen durchführen.

Alternativ kann die Verkapselung auch unter ausschließlicher Verwendung von Kationpolymeren erfolgen, wobei man sich deren Eigenschaft zu Nutze macht, bei pH-Werten oberhalb des pKs-Wertes zu koagulieren.

In einem zweiten alternativen Verfahren wird zur Herstellung der erfindungsgemäßen Mikrokapseln wird zunächst eine O/W-Emulsion zubereitet, welche neben dem Ölkörper, Wasser und den Wirkstoffen eine wirksame Menge Emulgator enthält. Zur Herstellung der Matrix wird diese Zubereitung unter starkem Rühren mit einer entsprechenden Menge einer wässrigen Anionpolymerlösung versetzt. Die Membranbildung erfolgt durch Zugabe der Chitosanlösung. Der gesamte Vorgang findet vorzugsweise im schwach sauren Bereich bei pH = 3 bis 4 statt. Falls erforderlich erfolgt die pH-Einstellung durch Zugabe von Mineralsäure. Nach der Membranbildung wird der pH-Wert auf 5 bis 6 angehoben, beispielsweise durch Zugabe von Triethanolamin oder einer anderen Base. Hierbei kommt es zu einem Anstieg der Viskosität, die durch Zugabe von weiteren Verdickungsmitteln, wie z.B. Polysacchariden, insbesondere Xanthan-Gum, Guar-Guar, Agar-Agar, Alginaten und Tylosen, Carboxymethylcellulose und Hydroxyethylcellulose, höhermolekularen Polyethylenglycolmono- und - diestern von Fettsäuren, Polyacrylaten, Polyacrylamiden und dergleichen noch unterstützt werden kann. Abschließend werden die Mikrokapseln von der wässrigen Phase beispielsweise durch Dekantieren, Filtrieren oder Zentrifugieren abgetrennt.

In einem dritten alternativen Verfahren erfolgt die Bildung der Mikrokapseln um einen vorzugsweise festen, beispielsweise kristallinen Kern, indem dieser schichtweise mit entgegengesetzt geladenen Polyelektrolyten eingehüllt wird. In diesem Zusammenhang sei auf das Europäische Patent EP 1064088 B1 (Max-Planck Gesellschaft) verwiesen.

### Gewerbliche Anwendbarkeit

Ein weiterer Gegenstand der vorliegenden Offenbarung ist auf Nahrungsmittel gerichtet, die die beschriebenen Stoffgemische enthalten. Der Begriff Nahrungsmittel ist dabei weit zu sehen und umfasst nicht nur Lebensmittel, wie beispielsweise Getränke (z.B. Eistees, Limonaden etc.), Backwaren, Milchprodukte und dergleichen, sondern auch Genusswaren, wie z.B. Kaugummis oder Produkte, die zwar nicht zum Verkehr gedacht sind, aber beispielsweise mit der Mundhöhle in Kontakt gebracht werden, wie beispielsweise Zahnpasten, Mundwässer und dergleichen. Die beschriebenen Stoffgemische können in den besagten Mitteln in einer wirksamen Menge zugegen sein, wie beispielsweise etwa 0,1 bis etwa 2, vorzugsweise etwa 0,5 bis etwa 1 Gew.-% - bezogen auf das konfektionierte Produkt.

Ein weiterer Aspekt der Erfindung betrifft ein Verfahren zur Verbesserung der geschmacklichen Eigenschaften von monocyclischen Terpenen, welches sich dadurch auszeichnet, dass man ihnen eine wirksame Menge an Rebaudiosiden oder diese enthaltende Pflanzenextrakte zusetzt, so dass danach die monocyclischen Terpene einerseits und die Rebaudioside oder diese enthaltende Pflanzenextrakte andererseits in einem Gewichtsverhältnis von 20:80 bis 80:20 vorliegen. Schließlich betrifft die Erfindung auch noch die Verwendung von Rebaudiosiden oder diese enthaltende Pflanzenextrakte zur Verbesserung der geschmacklichen Eigenschaften von monocyclischen Terpenen, speziell von d-Limonen, wobei das Gewichtsverhältnis der monocyclischen Terpene einerseits und der Rebaudioside oder diese enthaltende Pflanzenextrakte andererseits 20:80 bis 80:20 beträgt.

### Beispiele

### Beispiel, Vergleichsbeispiel V1

Verschiedene Stoffgemische auf Basis von D-Limonen wurden zur Herstellung von Softdrinks verwendet und die Produkte 48 h bei 20°C gelagert. Anschließend wurden die geschmacklichen Eigenschaften von einem Panel bestehend aus 5 geschulten Testern auf einer Skala von 1 (nicht vorhanden) bis 10 (stark ausgeprägt) bewertet. Die Zusammensetzungen und Ergebnisse sind in der nachfolgenden Tabelle 1 zusammengefasst. Es handelt sich um Mittelwerte von 5 Messreihen. Beispiel 1 ist erfindungsgemäß, Beispiel V1 dient zum Vergleich. Das Beispiel C entspricht dem Standard, d.h. der geschmacklichen Beurteilung des Ausgangsproduktes unmittelbar nach seiner Herstellung.

**Tabelle 1**

| Geschmackliche Eigenschaften von Softdrinkformulierungen | | | |
|---|---|---|---|
| **Zusammensetzung** | **C** | **V1** | **1** |
| Sucrose | 10 | 10 | 10 |
| Zitronensäure | 0.2 | 0.2 | 0.2 |
| D-Limonen | 0.01 | 0.01 | 0.01 |
| Rebaudiosid | - | - | 0.002 |
| Mogrosid V | - | - | 0.001 |
| Wasser | Ad 100 | | |

| ***Geschmackliche Beurteilung*** | | | |
|---|---|---|---|
| Zitrusnote | 7 | 5 | 9 |
| Krautnote | 0 | 5 | 2 |
| Kümmelnote | 0 | 5 | 2 |
| Bitterkeit | 3 | 4 | 1 |

Die Beispiele und Vergleichsbeispiele zeigen, dass die erfindungsgemäße Aufgabe vollumfänglich erfüllt wird: während die Ausgangsformulierung bei der Lagerung viel von ihrer Fruchtnote verliert und sich im Gegenzug ein krautiger Geschmack mit einer ausgeprägten Kümmelnote entwickelt, wird dies durch Zugabe geringer Mengen an Steviosiden nicht nur verhindert, die Zitrusnote wird sogar gesteigert. Dieser Effekt kann durch weitere Zugabe von Glycyrrhizinsäure bzw. anderen Wirkstoffen noch verbessert werden.

### Formulierungsbeispiele

**Tabelle 2a**

| Kaugummimassen | | | | | | | | |
|---|---|---|---|---|---|---|---|---|
| **Zusammensetzung** | **A** | **B** | **C** | **D** | **E** | **F** | **G** | **H** |
| Polyisobutylen (MW 20.000) | 30,0 | 30,0 | 30,0 | 40,0 | 20.0 | 20.0 | 25.0 | 30.0 |
| Glucose | 51,0 | 51,0 | 51,0 | 42,5 | | | | |
| Kornsirup | 10,0 | 10,0 | 10,0 | 8,0 | | | | |
| Sorbitol | | | | | 51,0 | 51,0 | 47,5 | 44,5 |
| Mannitol | | | | | 5,0 | 5,0 | 4,3 | 3,6 |
| Glycerin | 1,8 | 1,8 | 1,8 | 1,8 | 8,0 | 8,0 | 8,0 | 7,0 |
| Lycasin:Glycerin (1:1) | | | | | 8,2 | 8,2 | 8,0 | 7,0 |
| Lecithin | | | | | 0,2 | 0,2 | 0,2 | 0,2 |
| D-Limonen/Rebaudiosid A (1:1) | 1,0 | 1,0 | 1,0 | 1,0 | 1,0 | 1,0 | 1,0 | 1,0 |
| | | | | | | | | |
| Wasser | Ad 100 | | | | | | | |

**Tabelle 2b**

| Zusammensetzung Zahnpaste | | |
|---|---|---|
| **Komponente** | **Handelsprodukt** | **Menge [Gew.-%]** |
| Fällungskieselsäure | Sident® 12 DS | 18,0 |
| Verdickungskieselsäure | Aerosil® 200 | 0,8 |
| Sorbit | | 17,5 |
| Glycerin | | 17,5 |
| Carboxymethylcellulose | Relatin® 100 SR | 0,9 |
| Natrium laurylsulfat | Texapon® K1296 | 2,0 |
| Natriumfluorid | | 0,22 |
| Saccharin-Natrium | | 0,2 |
| D-Limonen/Rebaudiosid A (1:1) | | 1,0 |
| Wasser | | Ad 100 |

**Tabelle 2c**

| Zusammensetzung Mundwasser | | |
|---|---|---|
| **Komponente** | **Handelsprodukt** | **Menge [Gew.-%]** |
| Ethanol (96%ig) | | 10,0 |
| Sorbitanmonolaurat+20EO | Tween® 20 | 0,4 |
| D-Limonen/Rebaudiosid A (1:1) | | 0,3 |
| Sorbit (70%ige wässrige Lösung) | | 8,0 |
| p-Hydroxybenzoesäuremethylester | | 0,2 |
| Wasser | | Ad 100 |

## Patentansprüche

1. Stoffgemische, enthaltend
(a) 20 bis 80 Gew.-% monocyclische Terpene und
(b) 80 bis 20 Gew.-% Wirkstoffe, ausgewählt aus der Gruppe, die gebildet wird von Rebaudiosiden oder diese enthaltende Pflanzenextrakten, Steviosiden oder diese enthaltende Pflanzenextrakten, Naringindihydrochalkon, Mogrosiden oder diese enthaltende Pflanzenextrakten, Rubusosiden oder diese enthaltende Pflanzenextrakten.

2. Stoffgemische nach Anspruch 1, **dadurch gekennzeichnet, dass** sie als Komponente (a) Limonen enthalten.

3. Stoffgemische nach den Ansprüchen 1 und/oder 2, **dadurch gekennzeichnet, dass** sie als Komponente (a) D-Limonen enthalten.

4. Stoffgemische nach mindestens einem der Ansprüche 1 bis 3, **dadurch gekennzeichnet, dass** sie als Komponente (b) Extrakte der Pflanze *Stevia rebaudiana* enthalten.

5. Stoffgemische nach mindestens einem der Ansprüche 1 bis 4, **dadurch gekennzeichnet, dass** sie als Komponente (b) Rebaudiosid A enthalten.

6. Stoffgemische nach mindestens einem der Ansprüche 1 bis 5, **dadurch gekennzeichnet, dass** sie als Komponente (b) Extrakte der Pflanze *Rubus Suavissimus* enthalten.

7. Stoffgemische nach mindestens einem der Ansprüche 1 bis 6, **dadurch gekennzeichnet, dass** sie als optionale Komponente (c) Extrakte der Pflanze *Glycyrrhiza glabra* enthalten.

8. Stoffgemische nach mindestens einem der Ansprüche 1 bis 7, **dadurch gekennzeichnet, dass** sie als optionale Komponente (c) das Natrium-, Kalium- oder Ammoniumsalz der Glycyrrhizinsäure enthalten.

9. Stoffgemische nach mindestens einem der Ansprüche 1 bis 8, **dadurch gekennzeichnet, dass** sie
(a) 20 bis 80 Gew.-% monocyclische Terpene und
(b) 80 bis 20 Gew.-% Rebaudioside oder diese enthaltende Pflanzenextrakte,
(c) 0,5 bis 10 Gew.-% Wirkstoffe, ausgewählt aus der Gruppe, die gebildet wird von Naringin, Dihydrochalconen, Mogrosiden sowie Extrakten der Pflanzen der Gattung *Rubus,* und/oder
(d) 0,5 bis 10 Gew.-% Glycyrrhizinsäure, deren Salze oder diese enthaltende Pflanzenextrakte,
mit der Maßgabe enthalten, dass sich die Mengenangaben gegebenenfalls mit Wasser zu 100 Gew.-% ergänzen.

10. Stoffgemische nach mindestens einem der Ansprüche 1 bis 9, **dadurch gekennzeichnet, dass** sie einen Wassergehalt von weniger als 2 Gew.-% aufweisen.

11. Stoffgemische nach mindestens einem der Ansprüche 1 bis 10, **dadurch gekennzeichnet, dass** sie als Kapseln vorliegen.

12. Verfahren zur Verbesserung der geschmacklichen Eigenschaften von monocyclischen Terpenen, **dadurch gekennzeichnet, dass** man ihnen eine Menge an Rebaudiosiden oder diese enthaltende Pflanzenextrakte zusetzt, so dass danach die monocylischen Terpene einerseits und die Rebaudioside oder diese enthaltende Pflanzenextrakte andererseits in einem Gewichtsverhältnis von 20:80 bis 80:20 vorliegen.

13. Verwendung von Rebaudiosiden oder diese enthaltende Pflanzenextrakte zur Verbesserung der geschmacklichen Eigenschaften von monocyclischen Terpenen, wobei das Gewichtsverhältnis der monocyclischen Terpene einerseits und der Rebaudioside oder diese enthaltenden Pflanzenextrakte andererseits 20:80 bis 80:20 beträgt.

## Claims

1. Substance mixtures, comprising
(a) 20 to 80 wt.-% monocyclic terpenes and
(b) 80 to 20 wt.-% active substances selected from the group consisting of rebaudiosides or plant extracts comprising these, steviosides or plant extracts comprising these, naringin dihydrochalcone, mogrosides or plant extracts comprising these, rubusosides or plant extracts comprising these.

2. Substance mixtures according to claim 1, **characterized in that** they contain limonene as component (a).

3. Substance mixtures according to the claims 1 and/or 2, **characterized in that** they contain D-limonene as component (a).

4. Substance mixtures according to at least one of claims 1 to 3, **characterized in that** they contain extracts of the plant *Stevia rebaudiana* as component (b).

5. Substance mixtures according to at least one of claims 1 to 4, **characterized in that** they contain rebaudioside A as component (b).

6. Substance mixtures according to at least one of claims 1 to 5, **characterized in that** they contain extracts of the plant *Rubus Suavissimus* as component (b).

7. Substance mixtures according to at least one of claims 1 to 6, **characterized in that** they contain extracts of the plant *Glycyrrhiza glabra* as optional component (c).

8. Substance mixtures according to at least one of claims 1 to 7, **characterized in that** they contain the sodium, potassium or ammonium salt of glycyrrhinic acid as optional component (c).

9. Substance mixtures according to at least one of claims 1 to 8, **characterized in that** they contain
(a) 20 to 80 wt.-% monocyclic terpenes and
(b) 80 to 20 wt.-% rebaudiosides or plant extracts comprising these,
(c) 0.5 to 10 wt.-% active substances selected from the group consisting of naringin, dihydrochalcones, mogrosides as well as extracts of plants of the genus *Rubus*, and/or
(d) 0.5 to 10 wt.-% glycyrrhinic acid, the salts thereof or plant extracts comprising these,
provided that the indications of quantity add up to 100 wt.-% with water where applicable.

10. Substance mixtures according to at least one of claims 1 to 9, **characterized in that** they have a water content of less than 2 wt.-%.

11. Substance mixtures according to at least one of claims 1 to 10, **characterized in that** they are present as capsules.

12. Method for improving the taste qualities of monocyclic terpenes, **characterized in that** an amount of rebaudiosides or plant extracts comprising these is added to the monocyclic terpenes such that after addition, the monocyclic terpenes on the one side and the rebaudiosides or plant extracts comprising these on the other side are present in a weight ratio of from 20 : 80 to 80 : 20.

13. Use of rebaudiosides or plant extracts comprising these for improving the taste qualities of monocyclic terpenes, wherein the weight ratio of the monocyclic terpenes on the one side and the rebaudiosides or plant extracts comprising these on the other side is 20 : 80 to 80 : 20.

## Revendications

1. Mélanges de substances contenant
(a) entre 20 et 80 % en poids de terpènes monocycliques et
(b) entre 80 et 20 % en poids de principes actifs choisis dans le groupe qui est constitué par les rebaudiosides ou les extraits de plante les contenant, les stéviosides ou les extraits de plante les contenant, la naringine dihydrochalcone, les mogrosides ou les extraits de plante les contenant, les rubusosides ou les extraits de plante les contenant.

2. Mélanges de substances selon la revendication 1, **caractérisés par le fait qu'**ils contiennent le limonène en tant que composant (a).

3. Mélanges de substances selon les revendications 1 et/ou 2, **caractérisés par le fait qu'**ils contiennent le D-limonène en tant que composant (a).

4. Mélanges de substances selon l'une au moins des revendications 1 à 3, **caractérisés par le fait qu'**ils contiennent en tant que composant (b) des extraits de la plante *Stevia rebaudiana.*

5. Mélanges de substances selon l'une au moins des revendications 1 à 4, **caractérisés par le fait qu'**ils contiennent le rébaudioside A en tant que composant (b).

6. Mélanges de substances selon l'une au moins des revendications 1 à 5, **caractérisés par le fait qu'**ils contiennent en tant que composant (b) des extraits de la plante *Rubus suavissimus.*

7. Mélanges de substances selon l'une au moins des revendications 1 à 6, **caractérisés par le fait qu'**ils contiennent en tant que composant (c) optionnel des extraits de la plante *Glycyrrhiza glabra.*

8. Mélanges de substances selon l'une au moins des revendications 1 à 7, **caractérisés par le fait qu'**ils contiennent en tant que composant (c) optionnel le sel de sodium, de potassium ou d'ammonium de l'acide glycyrrhizique.

9. Mélanges de substances selon l'une au moins des revendications 1 à 8, **caractérisés par le fait qu'**ils contiennent
(a) entre 20 et 80 % en poids de terpènes monocycliques et
(b) entre 80 et 20 % en poids de rébaudiosides ou d'extraits de plante les contenant,
(c) entre 0,5 et 10 % en poids de principes actifs choisis dans le groupe qui est constitué par la naringine, les dihydrochalcones, les mogrosides ainsi que les extraits des plantes du genre *Rubus,* et/ou
(d) entre 0,5 et 10 % en poids d'acide glycyrrhizique, de ses sels ou d'extraits de plante en contenant,
à condition que les indications de quantité se complètent pour donner 100 % en poids, le cas échéant avec de l'eau.

10. Mélanges de substances selon l'une au moins des revendications 1 à 9, **caractérisés par le fait qu'**ils présentent une teneur en eau inférieure à 2 % en poids.

11. Mélanges de substances selon l'une au moins des revendications 1 à 10, **caractérisés par le fait qu'**ils se présentent sous forme de gélules.

12. Procédé d'amélioration des caractéristiques gustatives de terpènes monocycliques, **caractérisé par le fait que** l'on y ajoute une quantité de rébaudiosides ou d'extraits de plante les contenant, de sorte que, après, les terpènes monocycliques d'une part et les rébaudiosides ou les extraits de plante les contenant d'autre part sont présents dans un rapport pondéral compris entre 20 : 80 et 80 : 20.

13. Utilisation de rébaudiosides ou d'extraits de plante les contenant pour améliorer les propriétés gustatives de terpènes monocycliques, le rapport pondéral des terpènes monocycliques d'une part et des rébaudiosides ou des extraits de plante les contenant d'autre part étant compris entre 20 : 80 et 80 : 20.
